Europäisches Patentamt

European Patent Office

Office européen des brevets

(19)

(11) Veröffentlichungsnummer: **0 352 413**
**A2**

## (12) EUROPÄISCHE PATENTANMELDUNG

(21) Anmeldenummer: 89107711.7

(22) Anmeldetag: 27.04.89

(51) Int. Cl.⁴: **G01N 1/08**

(30) Priorität: 26.07.88 DE 3825359

(43) Veröffentlichungstag der Anmeldung:
31.01.90 Patentblatt 90/05

(84) Benannte Vertragsstaaten:
**DE FR GB IT NL**

(71) Anmelder: **ESG Elektronik-System-**
**Gesellschaft mbH**
**Vogelweideplatz 9**
**D-8000 München 80(DE)**

(72) Erfinder: **Tuis, Luigi, Dr. Ing.**
**St.-Cajetan-Strasse 13**
**D-8000 München 80(DE)**

(74) Vertreter: **Prechtel, Jörg et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**D-8000 München 86(DE)**

(54) **Verfahren und Vorrichtung zur Höhenwindbestimmung mit Hilfe einer Ballonsonde.**

(57) Ein Verfahren zur Höhenwindbestimmung, insbesondere im Bereich über 20 km Höhe, mit Hilfe
einer Ballonsonde sieht zur Kontrolle der ermittelten
Schrägentfernung aufgrund Radiotheodolit-Peilmessung und Höhenbestimmung aufgrund meteorologischer Meßdaten aktive Kontrollmessungen vor, mit
Abstrahlung wenigstens eines Radarsignalimpulses
durch die Bodenstation, Empfang reflektierter Radiosignalimpulse, Laufzeitmessung dieser Impulse in einem aufgrund der bisher ermittelten Schrägentfernungen berechneten, einem erwarteten Schrägentfernungsbereich der Ballonsonde entsprechenden
Zeitfenster und Schrägentfernungsberechnung aufgrund der Laufzeitmessung. Derartige aktive Messungen können auch in Höhenbereichen mit unzureichend genauen meteorologischen Meßdaten durchgeführt werden.

EP 0 352 413 A2

## Verfahren und Vorrichtung zur Höhenwindbestimmung mit Hilfe einer Ballonsonde

Die Erfindung betrifft ein Verfahren zur Höhenwindbestimmung, insbesondere im Bereich über 20km Höhe, mit Hilfe einer Ballonsonde mit folgenden Einrichtungen:
- einer Meßeinrichtung für meteorologische Parameter, insbesondere Temperatur, Luftfeuchte und Luftdruck,
- einer an die Meßeinrichtung angeschlossenen Sendeeinrichtung zur Abgabe eines Meßdaten-Signals sowie zur Abgabe eines Anpeilsignals,
sowie mit Hilfe einer Bodenstation mit folgenden Einrichtungen:
- einem Empfänger für die Meßdaten-Signale,
- einem Radiotheodolit-Peilgerät für die Anpeilsignale und
- einem Rechner zur Ermittlung der Schrägentfernung der Ballonsonde aus den von der Meßeinrichtung ermittelten meteorologischen Meßdaten und den vom Peilgerät ermittelten Richtungswinkeln.

Bei der Bahnverfolgung von Wetterballonen (Ballonsonden) zur Ermittlung von Windrichtungs- und Windgeschwindig keitsprofilen werden unterschiedliche Verfahren eingesetzt, die jeweils einen gasgefüllten Ballon einsetzt, der mit seiner Nutzlast entlang einer durch den herrschenden Wind bestimmten Ballonbahn fliegt, wobei aus der Kenntnis dieser Ballonbahn die Richtung und Geschwindigkeit des Windes in Abhängigkeit von der Höhe berechnet wird.

Das klassische Verfahren, welches für viele zivile und militärische Zwecke eingesetzt wird und welches die genauesten Ergebnisse liefert, ist die Bahnverfolgung mittels Radarmessung. Ein Radarreflektor als Teil der Nutzlast des Wetterballons wird kontinuierlich vom Radar angepeilt; die jeweilige Ballonposition ergibt sich aus den beiden ermittelten Richtungswinkeln (Azimut $\alpha$ und Elevation $\epsilon$) und der Schrägentfernung E, die durch Laufzeitmessung des vom Radarreflektor reflektierten Radarsignalimpulses ermittelt wird. Dieses Verfahren liefert zwar die genauesten Ergebnisse, ist jedoch für militärische Nutzer von Nachteil, da der ständig im Betrieb befindliche aktive Radarstrahler am Boden von gegnerischer Seite aus lokalisiert werden kann und daher zunehmend gefährdet ist.

Bei einem weiteren Verfahren wird als Nutzlast ein Transponder für ein existierendes Navigationssystem benötigt (z.B. OMEGA, LORAN-C). Dieser in der Wettersonde integrierte Transponder übermittelt der Bodenstation Transponderdaten, die er unter Zuhilfenahme von Signalen von Navigations-Bodenstationen oder geostationären Navigationssatelliten erhalten hat, und die es der Bodenstation erlauben, die Ballonposition unmittelbar zu bestimmen. Dieses Verfahren kommt für militärische Nutzer jedoch nicht in Frage, da die verwendeten Navigationssystem, insbesondere Navigationssatelliten, jederzeit außer Betrieb gesetzt werden können.

Gemäß dem eingangs genannten Verfahren mittels Radiotheodolit, der auch durch einen optischen Theodolit ersetzt werden kann, werden nur die Richtungswinkel vom Beobachter am Boden zum Ballon gemessen. Für die Höhenberechnung ist der Ballon als Wettersonde ausgebildet, die eine Meßeinrichtung für meteorologische Parameter, insbesondere Temperatur, Luftfeuchtigkeit und Luftdruck aufweist, da aus diesen Parametern die Höhe berechnet werden kann. Als von der Sonde abzugebendes Anpeilsignal kann ein gesondertes Signal von der Sonde emittiert werden; es kann auch hierfür das Meßdatensignal verwendet werden. Aus dem Schnittpunkt des durch die Richtungswinkel festgelegten Richtungsstrahls mit der meteorologisch berechneten Höhenfläche kann die Ballonposition bestimmt werden. Nachteilig an diesem bekannten Verfahren ist jedoch, daß sich die Meßgenauigkeit mit zunehmender Höhe bzw. mit abnehmendem Luftdruck verringert und Positionsbestimmungen in manchen Fällen bereits ab 8 bis 10 km nicht mehr ausreichend genau sind.

Der Erfindung liegt die Aufgabe zugrunde, ein Verfahren der eingangs genannten Art bereitzustellen, welches eine genauere Höhenwindbestimmung, insbesondere in größeren Höhen, ermöglicht unter Vermeidung eines dauernd abstrahlenden Radargerätes.

Diese Aufgabe wird dadurch gelöst, daß zur Kontrolle der ermittelten Schrägentfernung und/oder in Höhenbereichen mit unzureichend genauen meteorologischen Meßdaten aktive Kontrollmessungen durchgeführt werden durch
- Abstrahlung wenigstens eines Rardarsignalimpulses durch die Bodenstation zur Ballonsonde,
- Empfang reflektierter Radarsignalimpulse,
- Laufzeitmessungen dieser Impulse in einem aufgrund der bisher ermittelten Schrägentfernung berechneten, einem erwarteten Schrägentfernungsbereich der Ballonsonde entsprechenden Zeitfenster und
- Schrägentfernungsberechnung aufgrund der Laufzeitmessung.

Erfindungsgemäß wird bei den aktiven Kontrollmessungen die Schrägentfernung unmittelbar über Laufzeitmessung von Radarsignalimpulsen ermittelt, so daß die Fehlerquelle bei der Messung der meteorologischen Parameter wegfällt.

Aufgrund des an die erwartete Schrägentfernung angepaßten Zeitfensters wird genau der von der Ballonsonde herrührende Reflexionsimpuls erfaßt unter Ausblendung von Störsignalen, insbesondere von Reflexionssignalen an Wolken oder dergleichen. Die aktive Kontrollmessung kann daher in äußerst kurzer Zeit, beispielsweise innerhalb weniger Sekunden, durchgeführt werden. Bis zur nächsten aktiven Kontrollmessung werden keine Radarsignalimpulse von der Bodenstation abgestrahlt. Die Kontrollmessungen können zusätzlich zur laufenden Höhenmessung unter Verwendung der meteorologischen Meßdaten durchgeführt werden, so daß in regelmäßigen Abständen die ermittelten Höhendaten korrigiert werden, so daß die Fehlerfortpflanzung in der Höhenbestimmung immer wieder unterbrochen wird.

Gemäß einer Weiterbildung der Erfindung wird vorgeschlagen, daß die Meßfehler, insbesondere die Streuung, der meteorologischen Meßdaten laufend ermittelt werden, und daß bei Überschreitung einer vorgegebenen Fehlergrenze die Schrägentfernungsermittlung nur über aktive Kontrollmessungen erfolgt.

Wenn sich der Meßfehler der meteorologischen Meßdaten als zu groß herausstellt, kann im folgenden zur Schrägentfernungsermittlung auf die aktiven Kontrollmessungen umgeschaltet werden. In großen Höhen, insbesondere über 20 km, sind die Meßfehler bei der Druckmessung zu groß für eine meteorologische Berechnung der Höhe, so daß hier diese Höhe ausschließlich über die aktiven Kontrollmessungen zu bestimmen ist.

Da in diesen Höhen praktisch keine Turbulenzen auftreten, die die Aufstiegsgeschwindigkeit beeinflussen würden, reicht es aus, wenn erfindungsgemäß die aktiven Kontrollmessungen alle 3 bis 5 Minuten durchgeführt werden.

Einfacher Aufbau der Bodenstation ist in Weiterbildung der Erfindung dadurch gewährleistet, daß ein auf aktiven Betrieb mit Abstrahlung des wenigstens einen Rardarsignalimpulses umschaltbares Radiotheodolit-Peilgerät verwendet wird. Man erspart sich demnach ein gesondertes Radargerät.

In Weiterbildung der Erfindung wird vorgeschlagen, daß das Anpeilsignal der Ballonsonde eine Signalfrequenz > 6 GHz, vorzugsweise > 8 GHz, am besten zwischen 9 und 10 GHz, aufweist. Anpeilsignale dieser hohen Frequenz erfordern einen relativ kleinen Spiegelreflektordurchmesser des Peilgeräts, was nicht nur den Herstellungsaufwand verringert, sondern auch Vorteile in bezug auf Unauffälligkeit und Mobilität der Bodenstation bringt.

Hierbei wird vorgeschlagen, daß das Anpeilsignal im gleichen Frequenzband wie der Radarsignalimpuls liegt. Diese Maßnahme vereinfacht den Aufbau der Bodenstation, da entweder dieselben oder gleich aufgebaute Empfänger für das Anpeilsignal sowie den reflektierten Radarsignalimpuls eingesetzt werden können.

Die Erfindung betrifft ferner eine Bodenstation zur Durchführung des vorstehend beschriebenen erfindungsgemäßen Verfahrens, gekennzeichnet durch
- einen Empfänger für von einer Ballonsonde abgegebene Meßdatensignale,
- ein Radiotheodolit-Peilgerät für von der Ballonsonde abgegebene Peilsignale, welches auf aktiven Betrieb mit Abstrahlung von Radarsignalimpulsen umschaltbar ist,
- eine Recheneinheit zur Ermittlung von Schrägentfernung auf der Grundlage von meteorologischen Meßdaten sowie von Richtungswinkeln des Peilgeräts sowie zur Ermittlung eines einem erwarteten Schrägentfernungsbereich der Ballonsonde entsprechenden Zeitfensters für die Laufzeitmessung bei aktivem Betrieb.

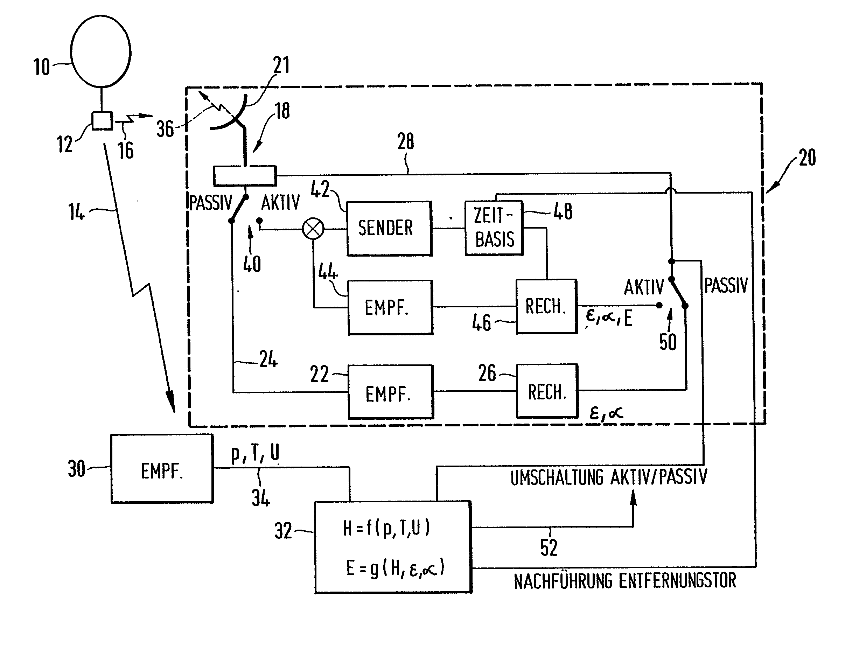

Die Erfindung wird im folgenden an einem bevorzugten Ausführungsbeispiel anhand der Zeichnung erläutert.

Die einzige Figur zeigt ein vereinfachtes Blockschaltbild für die erfindungsgemäße Kombination aus aktiver und passiver Höhenwindbestimmung. Man erkennt eine Ballonsonde 10 mit Nutzlast 12, in welcher eine Meßeinrichtung für meteorologische Parameter, insbesondere Temperatur T, Luftfeuchte U und Luftdruck p, integriert ist. An diese Meßeinrichtung ist eine Sendeeinrichtung angeschlossen, die ein Meßdatensignal (symbolisiert durch einen Pfeil 14) sowie ein Anpeilsignal (symbolisiert durch einen Pfeil 16) abgibt. Das Meßdatensignal liegt in einem Frequenzbereich von etwa 400 MHz, wie dies bei Wettersonden üblich ist. Das Anpeilsignal liegt dagegen in einem Frequenzbereich von etwa 9,4 GHz, bei einer vergleichsweise geringen Sendeleistung von ca. 15-20 mW. Aufgrund der hohen Frequenz kann das Anpeilsignal mit ausreichend hoher Genauigkeit durch ein Radiotheodolit-Peilgerät 18 als Teil einer Bodenstation 20 empfangen werden.

Bei Empfang dieser Anpeilsignale 16 arbeitet das Peilgerät 18 im passiven Betrieb, da es lediglich auf Empfang eingestellt ist (Der in der Figur angedeutete Spiegelreflektor 21 sorgt für die erforderliche Richtungsempfindlichkeit, so daß der Spiegelreflektor 21 des Peilgeräts 18 ständig entsprechend der Flugbahn der Ballonsonde nachgeführt werden kann). Im Rückkopplungsbetrieb wird hierbei aus dem Antennensignal, welches über eine Leitung 24 einem Empfänger 22 zugeführt wird, üblicherweise über einen Rechner 26 das momentane Richtungswinkelpaar Azimut α und Elevation ε ermittelt und dementsprechend zur Nachführung des Spiegelreflektors 21 einer nicht weiter dargestellten Nachführeinheit des Peilgeräts 18 über eine vom Rechner 26 ausgehende Leitung 28 zugeführt.

Gleichzeitig wird das Meßdatensignal 14 von einem weiteren Empfänger 30 der Bodenstation 20 empfangen und dekodiert, so daß die ermittelten Meßwerte der meteorologischen Parameter p, T und U einem Rechner 32 über eine Leitung 34 zugeführt werden können.

Dieser Rechner ermittelt auf der Grundlage dieser Meßdaten mit Hilfe bekannter parametrischer Formeln die momentane Höhe H der Ballonsonde 10. Aus dem Schnittpunkt des durch die Richtungswinkel $\epsilon$ und $\alpha$ definierten Strahls mit der durch die Höhe H definierten Höhenebene ergibt sich die genaue momentane Ballonposition. Auch läßt sich die Schrägentfernung E als Funktion dieser drei Größen ohne weiteres berechnen.

Da die Ermittlung der Höhe H aufgrund der meteorologischen Meßdaten häufig nicht ausreichend genau ist und sich zudem Meßfehler kumulieren, wird erfindungsgemäß in regelmäßigen Abständen von bspw. 3-5 Minuten eine aktive Kontrollmessung durchgeführt. Hierbei wird das Peilgerät 18 in aktiven Betrieb umgeschaltet, so daß es selbst Radarsignalimpulse (unterbrochener Pfeil 36) gezielt in Richtung zu einem Reflektor der Ballonsonde 10 abgibt und die auftretenden Reflexe empfängt. Es arbeitet also dann als Radar.

In der Figur ist ein erster Umschalter 40 symbolisch dargestellt, der bei Umschaltung aus der dargestellten, mit passiv bezeichneten, Stellung in die mit aktiv bezeichnete Stellung das Peilgerät 18 sowohl mit einem Sender 42 als auch einem Empfänger 44 verbindet. Ein Rechner 46 ist sowohl mit dem Empfänger 44 als auch, über eine Zeitbasis 48, mit dem Sender 42 verbunden. Der Rechner 46 seinerseits ist über einen zweiten Umschalter 50 in dessen mit "aktiv" bezeichneten Schaltstellung mit dem bereits erwähnten Rechner 32 verbunden. Die Betätigung der Umschalter 40 und 50 wird vom Rechner 32 vorgenommen -in der Figur ist eine mit "Umschaltung aktiv/passiv" bezeichnete Leitung 52 angedeutet, welche in nicht dargestellter Weise zu den beiden Umschaltern 40 und 50 führt, um diese zu betätigen.

Bei aktiven Entfernungsmessungen mittels Radar im militärischen Bereich besteht das Problem, daß die Bodenstation bei längerer Abstrahlung von dritter Seite geortet werden kann und demzufolge gefährdet ist. Längere Messungen mit mehrfacher Radarimpuls-Abstrahlung sind bislang deshalb erforderlich, weil es erst nach einer Reihe von Messungen gelingt, von der Vielzahl der empfangenen Signale (Störsignale; Rauschsignale; Reflexionssignale, bspw. an Wolken oder dergleichen) das von der Ballonsonde herrührende Reflexionssignal "herauszufischen". Erfindungsgemäß wird die erforderliche Meßzeit im aktiven Betrieb dadurch entscheidend herabgesenkt, daß aus den bisherigen Messungen die erwartete Schrägentfernung ermittelt wird, bzw. ein erwarteter Entfernungsbereich (Entfernungstor), der in ein entsprechendes Zeitfenster für die Laufzeitmessung die entsprechenden Radarsignal-Reflexionsimpulse einer Sonde im Entfernungstor umgerechnet wird. Dieses Zeitfenster wird der Zeitbasis 48 übermittelt. Nach Abstrahlung eines vom Sender 42 abgegebenen Radarimpulses wird die Zeitbasis 48 aktiviert (Auslösen der Zeitmessung für das Zeitfenster). Der Rechner 46 wird mit Hilfe des Zeitfensters "getriggert", d.h. er registriert nur die innerhalb des Zeitfensters auftretenden, vom Empfänger 44 empfangenen, Reflexionsimpulse. Bei turbulenzfreien Windströmungsverhältnissen wird im allgemeinen der fragliche Reflexionsimpuls im Zeitfenster liegen, so daß ohne zusätzliche abzustrahlende Radarimpulse für weitere Messungen mit verändertem Zeitfenster die Schrägentfernung E sogleich aus der ermittelten Laufzeit berechnet werden kann. Die ermittelten Werte für die Schrägentfernung E, den Azimutwinkel $\alpha$ und den Elevationswinkel $\epsilon$ werden dann dem Rechner 32 zugeführt; die ermittelten exakten Winkel $\epsilon$ und $\alpha$ werden zudem dem Peilgerät 18 zur Radarreflektornachführung übermittelt. Zur beschriebenen Schrägentfernungsbestimmung im aktiven Betrieb reichen einige Sekunden aus, so daß die Bodenstation praktisch nicht gefährdet ist.

Die aktiven Kontrollmessungen können in periodischen Abständen, bspw. jeweils nach 3-5 Minuten, durchgeführt werden, so daß die auf herkömmliche Weise im passiven Betrieb ermittelten Positionsberechnungen dementsprechend ständig korrigiert werden können.

Ferner kann dann, wenn die meteorologischen Höhenmessungen im passiven Betrieb zu ungenau werden, bspw. in größeren Höhen mit nicht ausreichend genauen Luftdruckmessungen, auf aktiven Betrieb umgeschaltet werden. Hierzu können die ermittelten meteorologischen Meßwerte einer Fehlerüberberprüfung unterzogen werden, so daß, nach Überschreiten einer vorgegebenen Fehlergrenze, insbesondere Fehlerstreuungsgrenze, auf aktiven Betrieb umgeschaltet werden kann. Man kann auch eine Höhe von bspw. 16 oder 20 km vorgeben, oberhalb der auf ständigen aktiven Betrieb umgeschaltet wird. Auch hier wird zur Reduzierung der Gefährdung der Bodenstation lediglich in periodischen Zeitabständen von bspw. 3-5 Minuten die entsprechende aktive Messung durchgeführt. Zur Berücksichtigung des inzwischen von der Ballonsonde zurückgelegten Flugwegs wird auf der Grundlage der zuletzt ermittelten Schrägentfernung sowie der hierbei ermittelten Bewegungsgeschwindigkeit der Ballonsonde die seit der letzten Messung zurückgelegte Schrägentfernungsstrecke abgeschätzt (extrapoliert) und das Entfernungstor, bzw. das Zeitfenster, dementsprechend gelegt. Da in größeren Höhen die Turbulenzen vernachlässigbar sind, kann das Zeitfenster entsprechend schmal gehalten werden, so daß auch hier nur innerhalb weniger Sekunden die Schrägentfernungsmessung im aktiven Betrieb erfolgen kann.

Die Erfindung, wie vorgehend beschrieben, kann wie folgt zusammengefaßt werden:

Ein Verfahren zur Höhenwindbestimmung, insbesondere im Bereich über 20 km Höhe, mit Hilfe einer Ballonsonde sieht zur Kontrolle der ermittelten Schrägentfernung aufgrund Radiotheodolit-Peilmessung und Höhenbestimmung aufgrund meteorologischer Meßdaten aktive Kontrollmessungen vor, mit Abstrahlung wenigstens eines Radarsignalimpulses durch die Bodenstation, Empfang reflektierter Radiosignalimpulse, Laufzeitmessung dieser Impulse in einem aufgrund der bisher ermittelten Schrägentfernungen berechneten, einem erwarteten Schrägentfernungsbereich der Ballonsonde entsprechenden Zeitfenster und Schrägentfernungsberechnung aufgrund der Laufzeitmessung. Derartige aktive Messungen können auch in Höhenbereichen mit unzureichend genauen meteorologischen Meßdaten durchgeführt werden.

## Ansprüche

1. Verfahren zur Höhenwindbestimmung, insbesondere im Bereich über 20km Höhe, mit Hilfe einer Ballonsonde mit folgenden Einrichtungen:
- einer Meßeinrichtung für meteorologische Parameter, insbesondere Temperatur, Luftfeuchte und Luftdruck,
- einer an die Meßeinrichtung angeschlossenen Sendeeinrichtung zur Abgabe eines Meßdaten-Signals sowie zur Abgabe eines Anpeilsignals,
sowie mit Hilfe einer Bodenstation mit folgenden Einrichtungen:
- einem Empfänger für die Meßdaten-Signale,
- einem Radiotheodolit-Peilgerät für die Anpeilsignale und
- einem Rechner zur Ermittlung der Schrägentfernung der Ballonsonde aus den von der Meßeinrichtung ermittelten meteorologischen Meßdaten und den vom Peilgerät ermittelten Richtungswinkeln,
dadurch **gekennzeichnet**,
daß zur Kontrolle der ermittelten Schrägentfernung und/oder in Höhenbereichen mit unzureichend genauen meteorologischen Meßdaten aktive Kontrollmessungen durchgeführt werden durch
- Abstrahlung wenigstens eines Radarsignalimpulses durch die Bodenstation zur Ballonsonde,
- Empfang reflektierter Radarsignalimpulse,
- Laufzeitmessungen dieser Impulse in einem aufgrund der bisher ermittelten Schrägentfernungen berechneten, einem erwarteten Schrägentfernungsbereich der Ballonsonde entsprechenden Zeitfenster und
- Schrägentfernungsberechnung aufgrund der Laufzeitmessung.

2. Verfahren nach Anspruch 1,
dadurch **gekennzeichnet**,
daß die aktive Kontrollmessung etwa alle drei bis fünf Minuten durchgeführt wird.

3. Verfahren nach Anspruch 1 oder 2,
dadurch **gekennzeichnet**,
daß die Meßfehler, insbesondere die Streuung der meteorologischen Meßdaten, laufend ermittelt werden, und daß bei Überschreitung einer vorgegebenen Fehlergrenze die Schrägentfernungsermittlung nur über aktive Kontrollmessungen erfolgt.

4. Verfahren nach wenigstens einem der vorhergehenden Ansprüche,
dadurch **gekennzeichnet**,
daß der zu erwartende Schrägentfernungsbereich auf der Grundlage der zuletzt, insbesondere mit Hilfe der aktiven Kontrollmessung ermittelten Schrägentfernung, der dabei ebenfalls ermittelten Bewegungsgeschwindigkeit der Ballonsonde sowie des seitdem vergangenen Zeitintervalls ermittelt wird.

5. Verfahren nach wenigstens einem der vorhergehenden Ansprüche,
dadurch **gekennzeichnet**,
daß ein auf aktiven Betrieb mit Abstrahlung des wenigstens einen Radarsignalimpulses umschaltbares Radiotheodolit-Peilgerät verwendet wird.

6. Verfahren nach wenigstens einem der vorhergehenden Ansprüche,
dadurch **gekennzeichnet**,
daß das Anpeil-Signal der Ballonsonde eine Signalfrequenz > 6 GHz, vorzugsweise > 8 GHz, am besten zwischen 9 und 10 GHz aufweist.

7. Verfahren nach Anspruch 6,
dadurch **gekennzeichnet**,
daß das Anpeilsignal im gleichen Frequenzband wie der Radarsignalimpuls liegt.

8. Bodenstation zur Durchführung des Verfahrens nach wenigstens einem der vorhergehenden Ansprüche,
**gekennzeichnet** durch
- einen Empfänger (30) für von einer Ballonsonde (10) abgegebene Meßdatensignale (14),
- ein Radiotheodolit-Peilgerät (18) für von der Ballonsonde (10) abgegebene Peilsignale (16), welches auf aktiven Betrieb mit Abstrahlung von Radarsignalimpulsen (17) umschaltbar ist,
- eine Recheneinheit (32) zur Ermittlung von Schrägentfernungen (E) auf der Grundlage von meteorologischen Meßdaten (p,T,U) sowie von Richtungswinkeln ($\alpha,\epsilon$) des Peilgeräts (18) sowie zur Ermittlung eines einem erwarteten Schrägentfernungsbereich der Ballonsonde entsprechenden Zeitfensters für die Laufzeitmessung bei aktivem Betrieb.